Europäisches Patentamt

(19) European Patent Office

Office européen des brevets

(11) Numéro de publication : **0 109 467**
**B1**

(12) **FASCICULE DE BREVET EUROPÉEN**

(51) Int. Cl.⁴ : **E 03 D  3/04, F 16 K 21/12**

(45) Date de publication du fascicule du brevet :
**04.03.87**

(21) Numéro de dépôt : **82402082.0**

(22) Date de dépôt : **15.11.82**

(54) **Robinet à fonctionnement semi-automatique permettant de délivrer un volume prédéterminé d'un fluide sous pression, notamment robinet de chasse.**

(43) Date de publication de la demande :
**30.05.84 Bulletin 84/22**

(45) Mention de la délivrance du brevet :
**04.03.87 Bulletin 87/10**

(84) Etats contractants désignés :
**AT BE CH DE FR GB IT LI LU NL SE**

(56) Documents cités :
**CH-A-    46 813**
**DE-A- 2 603 731**
**FR-A-    783 133**
**FR-A-    952 857**

(73) Titulaire : **Blanc, René**
**rue des Plantes**
**F-77410 Villevaude (FR)**

(72) Inventeur : **Blanc, René**
**rue des Plantes**
**F-77410 Villevaude (FR)**

(74) Mandataire : **Gorree, Jean-Michel et al**
**Cabinet Plasseraud 84, rue d'Amsterdam**
**F-75009 Paris (FR)**

Jouve, 18, rue St-Denis, 75001 Paris, France

## Description

La présente invention concerne un robinet à fonctionnement semi-automatique permettant de délivrer un volume prédéterminé d'un fluide sous pression, un tel robinet trouvant une application préférée (mais non limitative) en tant que robinet de chasse d'eau, par exemple dans des installations de W.C.

Dans diverses applications, telles que par exemple les installations de W.C., il est nécessaire de libérer une quantité relativement importante d'un fluide, notamment d'un liquide, pendant un laps de temps relativement court, afin de créer un effet de chasse.

Dans de nombreux cas, on a eu recours à des réservoirs pour stocker la quantité de liquide nécessaire, qui est libérée au moment approprié par l'ouverture d'une vanne.

S'ils présentent l'avantage d'une simplicité relative, ces dispositifs présentent toutefois divers inconvénients.

Le fait que le liquide soit stocké dans le réservoir sous la pression ambiante (pression atmosphérique) entraîne la nécessité de compenser le défaut de pression propre du liquide, d'une part, en accroissant le volume de liquide (par exemple de l'ordre de 10 litres dans une installation de W.C.) et, d'autre part, en disposant le réservoir dans une situation élevée.

Il en résulte un encombrement excessif de l'installation et un gaspillage de liquide.

Dans d'autres cas, on a pu éliminer le réservoir en ayant recours à une commande par électrovannes. Toutefois, cette solution ne s'est pas révélée satisfaisante en raison du coût relativement élevé des électrovannes, de leur fiabilité limitée et, tout au moins dans certains cas, de problèmes de sécurité électrique posés par l'utilisation d'électrovannes alimentées directement par le secteur électrique.

L'invention a essentiellement pour but de remédier aux inconvénients des dispositifs de l'art antérieur et de proposer un robinet du genre considéré qui satisfasse, mieux que les dispositifs connus (voir notamment CH-A-46 813, FR-A-183 133 et FR-A-952 857), aux diverses exigences de la pratique et qui, en particulier, soit de conception et de fonctionnement simples, fiables, peu coûteux, sûrs.

A ces fins, on prévoit, conformément à l'invention, que le robinet à fonctionnement semi-automatique permettant de délivrer un volume prédéterminé d'un fluide sous pression, notamment robinet de chasse d'eau par exemple pour installation de W.C., comportant :

une entrée et une sortie du fluide sous pression ;

un organe obturateur mobile linéairement et dont le siège est situé entre les susdites entrée et sortie ;

une chambre cylindrique dont une extrémité est munie du susdit siège ;

un piston solidaire du susdit organe obturateur et mobile de façon étanche dans la chambre, ce piston comportant une première face tournée vers le susdit siège et une seconde face tournée vers le fond de la chambre, la première face du piston étant en permanence soumise à la pression du fluide d'entrée et possédant, en position d'obturation de l'organe obturateur, une surface inférieure à la surface de la seconde face du piston ;

une première liaison prévue entre l'entrée et le fond ou le voisinage du fond de la chambre ;

une seconde liaison prévue entre le fond ou le voisinage du fond de la chambre et la sortie ;

une restriction calibrée incorporée dans la première liaison pour que le retour du piston s'effectue avec une durée prédéterminée, correspondant à l'écoulement d'un volume prédéterminé de fluide entre l'ouverture et la fermeture de l'organe obturateur accouplé au piston ; et

un organe d'actionnement (3) agencé pour obturer la seconde liaison lorsqu'il n'est pas actionné et pour ouvrir cette seconde liaison et provoquer l'écoulement du fluide lorsqu'il est actionné,

caractérisé en ce que la restriction est formée par un mandrin cylindrique de révolution situé dans le passage du liquide empruntant le premier conduit s'étendant entre l'entrée et le fond de la chambre.

On conçoit dès lors qu'un robinet conforme à l'invention est de conception simple, et donc peu coûteux à la fabrication et à l'entretien ; il est d'un fonctionnement sûr et économique dans la mesure où c'est la pression du fluide lui-même qui est utilisée en tant que source motrice. La fiabilité est élevée.

En outre, l'utilisation directe du fluide sous pression permet d'obtenir l'effet de chasse requis avec une quantité moindre de fluide ; en particulier, dans le cas d'une installation de W.C., la quantité nécessaire d'eau sous une pression de distribution d'environ $3 \times 10^5$ Pa à $9 \times 10^5$ Pa peut être ramenée à environ 3 à 5 litres.

Enfin, la suppression du réservoir permet de réaliser des installations d'un encombrement extrêmement réduit.

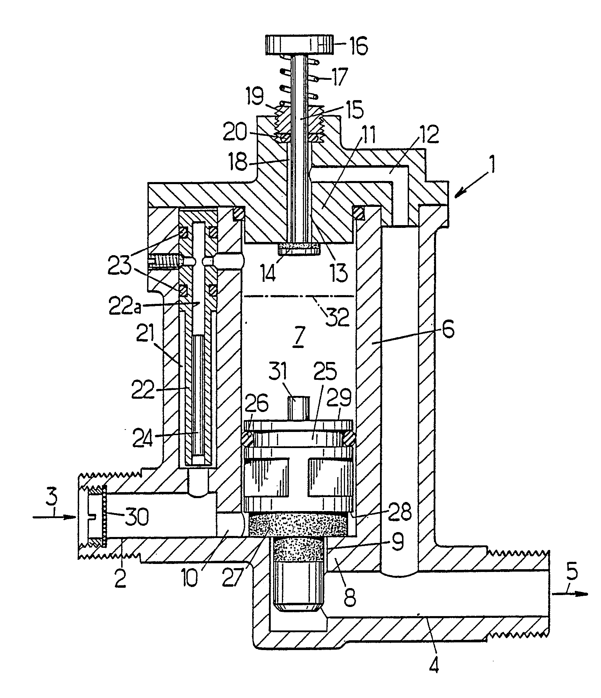

L'invention sera mieux comprise à la lecture de la description qui suit l'un de ses modes de réalisation préférés, donné uniquement à titre d'exemple illustratif sans aucun caractère limitatif. Dans cette description, on se réfère au dessin ci-annexé sur lequel la figure unique est une vue en coupe transversale d'un robinet conforme à l'invention.

Le robinet représenté sur ce dessin est plus spécialement destiné à être utilisé en tant que robinet de chasse d'eau dans une installation de W.C. ; mais il est entendu qu'un robinet conforme à l'invention peut trouver une application dans d'autres domaines.

Le robinet 1 comporte un conduit 2 d'arrivée d'eau sous pression (flèche 3) et un conduit 4 de sortie d'eau sous pression (flèche 5). Ces conduits sont munis de tous moyens appropriés (par exemple filetages) pour le raccordement du robinet, vers l'amont et vers l'aval, avec le reste de l'installation.

Le robinet 1 comprend en outre un corps ou cylindre 6 délimitant une chambre intérieure cylindrique 7 dont une paroi d'extrémité 8 (paroi inférieure sur la figure) est percée d'une ouverture 9 faisant communiquer la chambre 7 avec le conduit de sortie 4.

Une autre ouverture 10 est pratiquée dans la paroi latérale du corps 6 pour mettre la chambre 7 en communication avec le conduit d'arrivée 2.

Dans la paroi d'extrémité opposée ou fond 11 du corps 6 est pratiquée une conduite 12, débouchant par un orifice 13 dans la chambre 7 et se raccordant par son autre extrémité au conduit de sortie 4.

Avec l'orifice 13 coopère une soupape 14 solidaire d'une tige 15 traversant l'épaisseur de la paroi d'extrémité 11 et munie, à son extrémité libre, d'un bouton d'actionnement 16 ; un organe élastique, tel qu'un ressort hélicoïdal 17, est interposé entre la paroi 11 et le bouton 16 pour maintenir élastiquement la soupape 14 en position d'obturation de l'orifice 13.

Dans le mode de réalisation plus spécifiquement représenté sur la figure unique, la conduite 12, dans sa partie s'étendant à travers le fond 11, est constituée par un perçage 18 traversant le fond 11 de part en part et duquel part latéralement la portion restante de la conduite 12 s'étendant jusqu'au conduit de sortie 4.

A l'extrémité extérieure du perçage 18 est pratiqué un logement fileté dans lequel est vissé un bouchon 19 traversé par la tige 15, avec un joint torique d'étanchéité 20 enserrant la tige 15 et coincé entre le bouchon 19 et le fond du logement.

Enfin, une seconde conduite 21 s'étend depuis le conduit d'entrée 2 et débouche dans la chambre 7 au voisinage du fond 11. Dans cette conduite 21 est prévu un dispositif temporisateur constitué par un manchon 22 engagé de façon étanche (joints toriques 23) dans la conduite 21 et renfermant (en 22 a) un mandrin 24, de manière à former une restriction calibrée pour le passage du fluide.

A l'intérieur de la chambre 7 est disposé un piston 25 apte à coulisser de façon étanche (joint torique 26). Ce piston supporte à sa partie inférieure un organe obturateur 27 agencé pour coopérer avec l'ouverture 9 assurant la mise en communication de la chambre 7 et du conduit de sortie 4. Dans le mode de réalisation représenté, l'ouverture 9 est située dans l'axe de la chambre 7.

On notera que l'organe obturateur 27 présente un diamètre sensiblement inférieur au diamètre de la face inférieure 28 du piston, de telle manière que, lorsque l'obturateur 27 est en appui contre la paroi d'extrémité 8 et obture l'ouverture 9, la face inférieure 28 du piston 25 présente encore une surface active libre qui est notablement inférieure à la surface de la face supérieure 29 du piston.

On notera également que l'épaisseur de l'organe obturateur 27 est suffisante pour que, dans la position d'obturation de l'ouverture 9 représentée sur la figure, la face inférieure 28 du piston 25 reste située au-dessus de l'ouverture 10, de telle manière qu'au moins la surface active de ladite face inférieure 28 du piston soit en permanence soumise à la pression du fluide.

Avantageusement, un filtre 30 est prévu à l'orifice du conduit d'entrée 2.

Le fonctionnement du robinet de l'invention est le suivant.

On suppose qu'au départ le robinet est dans la position de repos représentée sur la figure et que l'installation est alimentée en liquide (par exemple de l'eau) sous une pression de 3 à $9 \times 10^5$ Pa (pression habituelle des réseaux de distribution).

La chambre 7 est elle-même remplie (à travers la restriction de la conduite 21) de liquide sous pression qui maintient le piston 25 et la soupape 14 en appui sur leurs sièges respectifs. Le maintien de ces deux organes en position d'obturation est en outre amélioré respectivement par la gravité agissant sur le piston 25 (en supposant le robinet monté comme représenté) et par le ressort 17 agissant sur la soupape 14 par l'intermédiaire de la tige 15.

En appuyant sur le bouton d'actionnement 16, la soupape 14 est soulevée de son siège, et le liquide sous pression contenu dans la chambre 7 s'écoule, par la conduite 12, vers la sortie qui jusqu'ici était vide de tout liquide. Le remplissage de la chambre 7 via la conduite 21 se trouve très ralenti par la restriction.

De ce fait, la surface active de la face inférieure 28 du piston se trouve soumise, de la part du liquide sous pression présent dans le conduit d'entrée, à une force ascendante supérieure à la force descendante (décroissante) s'exerçant sur la face supérieure 29 du piston. Le piston est alors repoussé brusquement vers le haut, livrant passage au liquide sous pression qui s'écoule alors directement de l'entrée vers la sortie via l'ouverture 10, le bas de la chambre 7 et l'ouverture 9.

Lorsque le piston 25 est en position haute, un doigt 31, saillant vers le haut sur sa face supérieure 29, le maintient à une certaine distance du fond 11 de la chambre (ligne en trait mixte 32) de manière à maintenir dégagé l'orifice de la conduite 21. Du liquide sous pression pénètre donc, via la conduite 21. Du liquide sous pression pénètre donc, via la conduite 21, dans la partie supérieure de la chambre 7 avec un débit relativement plus faible imposé par la restriction. La pression dans le haut de la chambre 7 augmente donc progressivement en maintenant la soupape 14 appliquée contre son siège et en exerçant sur la face supérieure 29 du piston 25 une force ascendante.

Le piston 25 est donc ramené dans sa position inférieure d'obturation de l'ouverture 9 avec une vitesse relativement faible, autrement dit au bout d'un intervalle de temps déterminé par la restriction. Il en résulte que l'actionnement du robinet a provoqué l'écoulement d'un certain volume d'eau, déterminé par la valeur de la restriction.

Le robinet conforme à l'invention autorise donc l'utilisation directe d'un liquide sous pression, sans recours à un détendeur, ce qui permet d'obtenir l'effet de chasse recherché tout en n'employant que le volume de liquide strictement nécessaire (par exemple de 3 à 5 litres d'eau pour une installation de W.C., au lieu de 10 litres avec les installations équipées d'un réservoir).

La suppression du réservoir antérieurement utilisé procure un gain de place important.

Enfin, la structure du robinet de l'invention est simple et peu coûteuse et le réglage de la restriction peut être effectué facilement par simple échange du mandrin 24. Eventuellement, on peut aisément prévoir des moyens de réglage accessibles de l'extérieur et autorisant un réglage in situ par l'utilisateur.

## Revendications

1. Robinet à fonctionnement semi-automatique permettant de délivrer un volume prédéterminé d'un fluide sous pression, notamment robinet de chasse d'eau par exemple pour installation de W.C., comportant :

une entrée (2) et une sortie (4) du fluide sous pression ;

un organe obturateur (27) mobile linéairement et dont le siège est situé entre les susdites entrée et sortie ;

une chambre cylindrique (7) dont une extrémité est munie du susdit siège ;

un piston (25) solidaire du susdit organe obturateur (27) et mobile de façon étanche dans la chambre (7), ce piston comportant une première face (28) tournée vers le susdit siège et une seconde face (29) tournée vers le fond (11) de la chambre, la première face (28) du piston étant en permanence soumise à la pression du fluide d'entrée et possédant, en position d'obturation de l'organe obturateur (27), une surface inférieure à la surface de la seconde face (29) du piston ;

une première liaison (21) prévue entre l'entrée et le fond ou le voisinage du fond (11) de la chambre (7) ;

une seconde liaison (12) prévue entre le fond (11) ou le voisinage du fond de la chambre et la sortie ;

une restriction calibrée (22, 24) incorporée dans la première liaison pour que le retour du piston s'effectue avec une durée prédéterminée, correspondant à l'écoulement d'un volume prédéterminé de fluide entre l'ouverture et la fermeture de l'organe obturateur accouplé au piston ; et

un organe d'actionnement (16) agencé pour obturer la seconde liaison lorsqu'il n'est pas actionné et pour ouvrir cette seconde liaison et provoquer l'écoulement du fluide lorsqu'il est actionné,

caractérisé en ce que la restriction est formée par un mandrin (24) cylindrique de révolution situé dans le passage du liquide empruntant le premier conduit (21) s'étendant entre l'entrée (2) et le fond (11) de la chambre.

2. Robinet selon la revendication 1, caractérisé en ce que dans le premier conduit (21) est disposé de façon étanche (joint 23) un manchon (22) à l'intérieur duquel (en 22a) est logé le mandrin (24).

3. Robinet selon la revendication 1 ou 2, caractérisé en ce que la restriction (22, 24) est réglable de manière à ajuster le volume de liquide à une valeur souhaitée.

## Claims

1. A tap with semi-automatic operation allowing delivery of a predetermined quantity of a fluid under pressure, more particularly a water flushing tap for example for installation in a W.C., comprising :

a. an inlet (2) and outlet (4) of fluid under pressure ;

b. a sealing member (27) which is displaceable in a linear manner and the seat of which is disposed between the aforementioned inlet and outlet ;

c. a cylindrical chamber (7) one end of which is fitted with the said seat ;

d. a piston (25) integral with the said sealing member (27) and movable in a sealing-tight manner in the chamber (7), the piston comprising a first face (28) turned towards the base (11) of the chamber, the first face of the piston being permanently subjected to the pressure on the inlet fluid and having in the sealed position (27) a lower surface than the surface of the second face (29) of the piston ;

e. a first link (21) provided between the inlet and the base or near the base (11) of the chamber (7) ;

f. a calibrated restriction (22, 24) incorporated into the first link so that the piston returns with predetermined timing, corresponding to the flow of a predetermined volume of fluid between the opening and closing of the sealing member coupled to the piston ; and

g. an actuating member (16) arranged so as to seal the second link when it is not actuated and to open the second link and cause the fluid to flow when it is actuated,

characterised in that the restriction is formed by a revolving cylindrical mandrel (24) mounted in the path of the liquid using the first pipe (21) extending between the inlet (2) and the base (11) of the chamber.

2. A tap according to claim 1, characterised in that in the first pipe (21) is disposed in a sealing-tight manner (join 23) a sleeve tube (22) inside of which (in 22a) the mandrel (24) is housed.

3. A tap according to claim 1 or 2, characterised in that the restriction (22, 24) is adjustable so that the volume of liquid is adjusted to a required value.

## Patentansprüche

1. Halbautomatisches Ventil zur Abgabe einer vorbestimmten Flüssigkeitsmenge unter Druck, insbesondere Druckspüler, z. B. zum Einbau in WC's, mit :

einem Eingang (2) und einem Ausgang (4) für die unter Druck stehende Flüssigkeit ;

einem linearbewegbaren Verschlußorgan (27), dessen Ventilsitz zwischen dem Eingang und dem Ausgang angeordnet ist ;

einer zylindrischen Kammer (7), deren eines Ende mit dem Ventilsitz ausgerüstet ist ;

einem Kolben (25), der kraftschlüssig mit dem Verschlußorgan (27) verbunden und in wasserdichter Weise in der Kammer (7) bewegbar ist, wobei dieser Kolben eine erste Fläche (28) aufweist, die in Richtung auf den Ventilsitz gerichtet ist, und eine zweite Fläche (29), die in Richtung auf den Deckel (11) der Kammer gerichtet ist, wobei die erste Fläche (28) des Kolbens immer dem Flüssigkeitsdruck am Ventileintritt unterworfen ist und eine kleinere Oberfläche in der Verschlußlage des Verschlußorganes (27) aufweist als die zweite Fläche (29) des Kolbens ;

einer ersten Verbindung (21), die zwischen dem Eingang und dem Deckel oder der Nähe des Deckels (11) der Kammer (7) vorgesehen ist ;

einer zweiten Verbindung (12), die zwischen dem Deckel (11) oder im Bereich des Deckels der Kammer und dem Ausgang vorgesehen ist ;

einer kalibrierten Drosselung (22, 24), die in der ersten Verbindung eingebaut ist, damit die Rückkehr des Kolbens in einer vorbestimmten Zeit abläuft dem Ausfluß eines vorbestimmten Volumens an Flüssigkeit zwischen der Öffnung und der Schließung des Verschlußorganes entsprechend, welches an den Kolbens angekoppelt ist ; und

mit einem Betätigungsorgan (16), das so angeordnet ist, um die zweite Verbindung, solange es nicht betätigt wird, zu verschließen und um diese zweite Verbindung zu öffnen und den Ausfluß von Flüssigkeit hervorzurufen wenn es betätigt wird, dadurch gekennzeichnet, daß die Drossel von einem zylindrischen Dreh-Dorn gebildet ist, der in dem Flüssigkeitsdurchgang derjenigen Flüssigkeit sitzt, die die erste Leitung (21) benutzt, die sich zwischen dem Eingang (2) und dem Deckel (11) der Kammer erstreckt.

2. Halbautomatisches Ventil nach Anspruch 1, dadurch gekennzeichnet, daß in der ersten Leitung (21) eine Muffe (22) wasserdicht (Dichtung 23) angeordnet ist, in deren Inneren (22a) der Dorn (24) gelagert ist.

3. Halbautomatisches Ventil nach Anspruch 1 oder 2, dadurch gekennzeichnet, daß die Drossel (22, 24) zur Einstellung eines gewünschten Wertes an Flüssigkeitsvolumen regulierbar ist.